# EUROPEAN PATENT SPECIFICATION

(11) **EP 3 081 384 B1**
(45) Date of publication and mention of the grant of the patent: **13.11.2019**
(21) Application number: 16000708.4
(22) Date of filing: 24.03.2016
(51) Int. Cl.: B41J 3/407

(54) **IMAGE PROCESSING APPARATUS, IMAGE PROCESSING METHOD, AND PROGRAM**
BILDVERARBEITUNGSVORRICHTUNG, BILDVERARBEITUNGSVERFAHREN UND PROGRAMM
APPAREIL DE TRAITEMENT D'IMAGES NUMÉRIQUES, PROCÉDÉ DE TRAITEMENT D'IMAGES NUMÉRIQUES ET PROGRAMME

(30) Priority: 17.04.2015 JP 2015085109; 08.03.2016 JP 2016044656
(43) Date of publication of application: 19.10.2016
(73) Proprietor: Canon Kabushiki Kaisha, Ohta-ku Tokyo (JP)
(72) Inventor: Sano, Toshiyuki, Tokyo (JP)
(74) Representative: WESER & Kollegen Patentanwälte PartmbB

(56) References cited:
- EP-A1- 1 462 266
- US-A1- 2004 189 768

## Description

### BACKGROUND OF THE INVENTION

### Field of the Invention

The present invention relates to a technique to generate data for forming colors and protrusions (concavities / convexities).

### Description of the Related Art

In recent years, aiming at preservation of cultural properties, duplication of cultural properties is performed by using a 3D printer or a printer using a UV curable ink. For example, in duplicating an oil painting, it is necessary to reproduce the colors of paints, protrusions (hereinafter, also referred to as concavities / convexities), and luster (hereinafter, also referred to as gloss). As the reproduction technique such as this, there is a technique described in Japanese Patent Laid-Open No. 2004-299058. Japanese Patent Laid-Open No. 2004-299058 has disclosed the printing technique to sequentially stack layers in order of a lower layer (concavo-convex layer) for forming concavities / convexities to be reproduced (hereinafter, also referred to as reproduction-target concavities / convexities), an image layer (color material layer) for reproducing colors, and a surface layer for producing a feeling of gloss (see also US 2004/0189768 A1).

### SUMMARY OF THE INVENTION

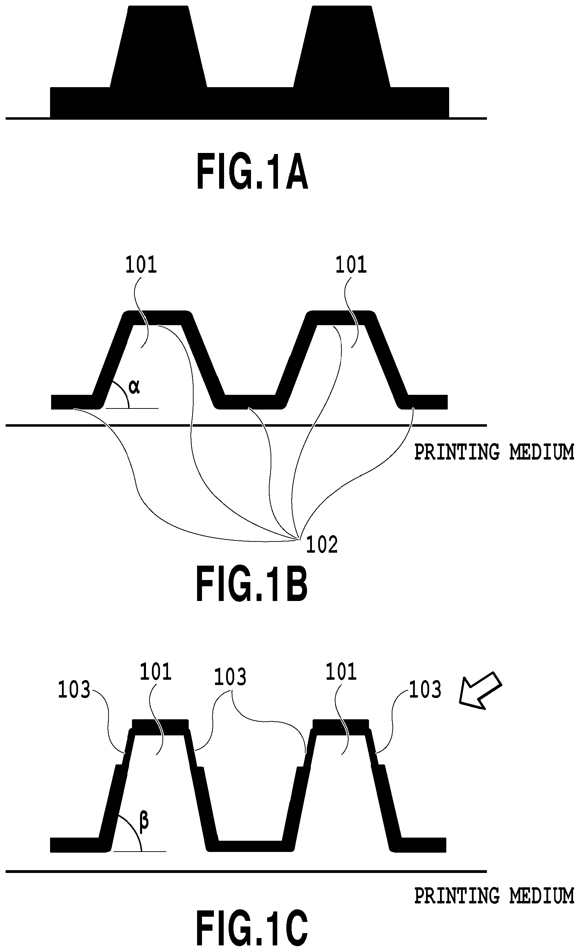

However, in the case where the color material layer is formed on the concavo-convex layer, it is not possible to stack ink on a steep slope, and therefore, there is a possibility that it is not possible to reproduce colors at a plurality of observation angles. Hereinafter, explanation is given using FIG. 1A to FIG. 1C. FIG. 1A to FIG. 1C are each a schematic diagram explaining a relationship between the concavo-convex layer and the color material layer in the reproduced object. FIG. 1A is a diagram schematically showing a section of the reproduced object. FIG. 1B is a section diagram in the case where a color material layer 102 is formed on a concavo-convex layer 101. As shown in FIG. 1B, in the case where an angle α is small, the concavo-convex layer 101 has a shape including comparatively gradual slopes. At this time, the ejected color material settles on the slope, and therefore, the concavo-convex layer 101 is coated with the color material layer 102 having substantially the uniform thickness.

On the other hand, in the case where an angle β is large as shown in FIG. 1C, the concavo-convex layer 101 has a shape including steep slopes. At this time, the ejected color material flows downward along the slope before settling on the slope, and therefore, a portion 103 where the color material layer is partially thin as shown in FIG. 1C appears. Because of this, for example, in the case where the reproduced object is observed in the direction of the arrow in FIG. 1C, the portion 103 where the color material layer is thin is observed directly, and therefore, color unevenness appears and such a problem occurs that color reproduction accuracy is reduced.

In the case where the color material layer is formed as the lowermost layer and the concavo-convex layer is formed on the color material layer by using a colorless transparent ink or the like in order to cope with the above-described problem, refraction of light will occur in the concavo-convex layer. At this time, particularly in the case where the thickness of the concavo-convex layer becomes as thick as several hundred µm to several mm, the position where light is reflected from the color material layer changes significantly compared to the case where the concavo-convex layer does not exist, and therefore, such a problem occurs that the reproduced object seems unnatural.

The present invention in its first aspect provides an image processing apparatus as specified in claims 1 to 6. The present invention in its second aspect provides an image processing method as specified in claim 7. The present invention in its third aspect provides a program as specified in claim 8.

Further features of the present invention will become apparent from the following description of exemplary embodiments (with reference to the attached drawings).

### BRIEF DESCRIPTION OF THE DRAWINGS

FIG. 1A to FIG. 1C are schematic diagrams each explaining a relationship between a concavo-convex layer and a color material layer;
FIG. 2 is a diagram showing a configuration of an image forming apparatus in a first embodiment;
FIG. 3 is a diagram explaining halftone representation by an area gradation method in the first embodiment;
FIG. 4A and FIG. 4B are diagrams each explaining an operation to form a three-dimensional image in the first embodiment;
FIG. 5 is a block diagram showing a hardware configuration of an image processing apparatus in the first embodiment;
FIG. 6 is a block diagram showing a software configuration example of a control unit in the first embodiment;
FIG. 7A to FIG. 7C are diagrams each explaining a concept of processing that is performed by the image forming apparatus in the first embodiment;
FIG. 8 is a flowchart of processing that is performed by the image processing apparatus in the first embodiment;
FIG. 9 is a flowchart of concavity / convexity information separation processing in the first embodiment;
FIG. 10 is a table indicating visual observation results for patterns at a variety of inclination angles in the first embodiment;
FIG. 11 is a flowchart of concavity / convexity information separation processing in a second embodiment;
FIG. 12 is a block diagram showing a software configuration example of a control unit in a third embodiment;
FIG. 13 is a flowchart of processing that is performed by an image processing apparatus in the third embodiment;
FIG. 14 is a diagram showing the relationship of FIGs. 14A and 14B;
FIGs. 14A and 14B are flowcharts of layer information creation processing in the third embodiment;
FIG. 15 is an example of a lookup table in the third embodiment;
FIG. 16 is a block diagram showing a software configuration example of a control unit in a fourth embodiment;
FIG. 17 is a flowchart of processing that is performed by an image processing apparatus in the fourth embodiment;
FIG. 18 is a flowchart of gloss data generation processing in the fourth embodiment; and
FIGs. 19A and 19B are examples of tables in the fourth embodiment.

### DESCRIPTION OF THE EMBODIMENTS

Hereinafter, embodiments of the present invention are explained with reference to the drawings. However, the following embodiments do not limit the present invention and all of the combinations of the features explained below are not necessarily indispensable for resolving the problems of the present invention. Explanation of the same configuration is given by attaching the same symbol.

### [First embodiment]

An image processing apparatus in the present embodiment generates data that can be output by an image forming apparatus that forms color material layers and concavo-convex layers on a printing medium, such as a sheet. An object to be reproduced, such as an oil painting, is substantially a two-dimensional image, but on the surface thereof, fine concavities / convexities are formed. Consequently, in the present embodiment, an oil painting is reproduced by forming color material layers and concavo-convex layers based on shape information representing the surface concavities / convexities of the oil painting and color information. In the present specification, an image including color material layers and concavo-convex layers is referred to as a three-dimensional image.

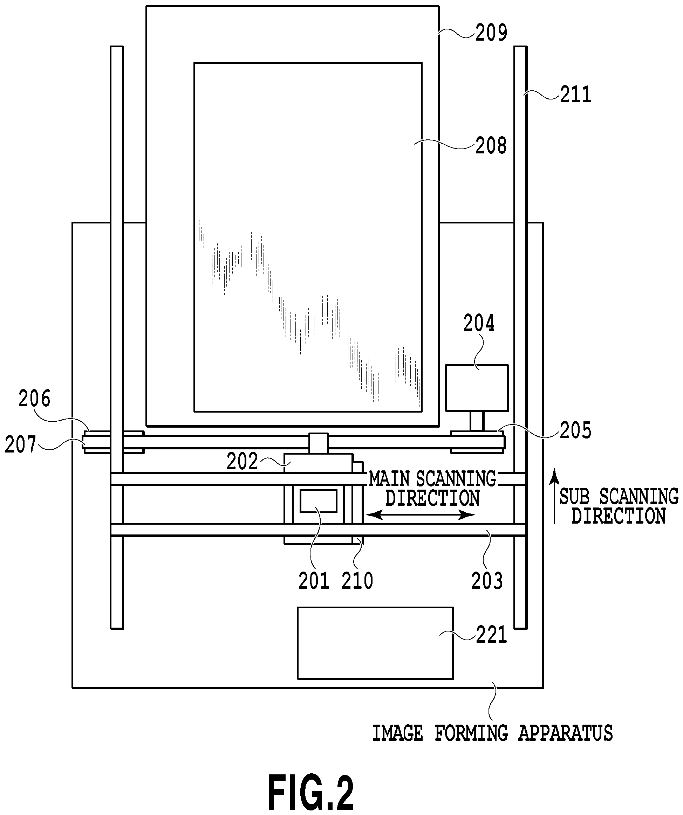

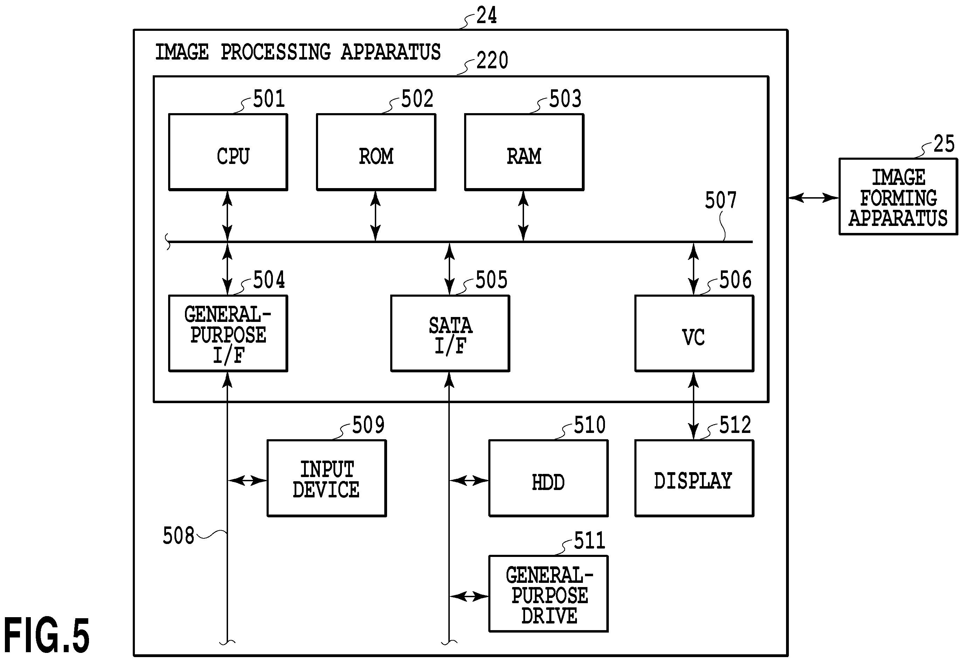

FIG. 5 is a configuration diagram of an image processing apparatus 24 in the present embodiment. The image processing apparatus 24 is connected with an image forming apparatus 25. In the present embodiment, as the image processing apparatus 24, a personal computer on which a printer driver for the image forming apparatus 25 is installed is supposed. Further, as the image forming apparatus 25, an ink jet printer that forms a three-dimensional image including concavo-convex layers and color material layers by using ink is supposed. First, the image forming apparatus 25 is explained. FIG. 2 shows an outline configuration of the image forming apparatus 25.

A head cartridge 201 includes a print head having a plurality of ejection ports and ink tanks that supply ink to the print head, and is further provided with a connector for receiving a signal or the like that drives each ejection port of the print head. Six types of ink tanks are provided independently of one another, one for a UV curable colorless transparent liquid resin ink for forming concavo-convex layers and the others for each color ink of cyan, magenta, yellow, black, and white for forming color material layers . The head cartridge 201 is mounted on a carriage 202 in an exchangeable manner after being positioned and the carriage 202 is provided with a connector holder for transmitting a drive signal or the like to the head cartridge 201 via the connector. Further, on the carriage 202, an ultraviolet light irradiation device 210 is mounted. The ultraviolet light irradiation device 210 is controlled so as to cure and fix an ejected curable ink onto a printing medium.

The carriage 202 is designed so as to be capable of reciprocating along a guide shaft 203. Specifically, the carriage 202 is driven via drive mechanisms, such as a motor pulley 205, a driven pulley 206, and a timing belt 207, by using a main scan motor 204 as a drive source and at the same time, the position and movement of the carriage 202 are controlled. The movement along the guide shaft 203 of the carriage 202 is referred to as a "main scan" and the direction of the movement is referred to as a "main scanning direction". A printing medium 208 is placed on a support 209. The head cartridge 201 mounted on the carriage 202 is held so that the ejection port surface protrudes downward from the carriage 202 and becomes parallel to the printing surface of the printing medium 208. A control unit 221 includes a CPU, a storage unit, etc., and controls the operation of each component of the image forming apparatus 25 so as to form a three-dimensional image based on data. In the present embodiment, as described above, explanation is given on the supposition that the image forming apparatus is a UV curable ink jet printer, but the image forming apparatus is not limited to this example provided that the image forming apparatus can eject the colorless transparent liquid resin ink and color ink. For example, it may also be possible to use a solid ink in place of the UV curable ink. Further, it is also possible to apply the present embodiment to an electrophotographic image forming apparatus in place of the ink jet image forming apparatus.

### <Three-dimensional image forming operation>

Hereinafter, the three-dimensional image forming operation that is performed by the ink jet printer with the configuration shown in FIG. 2 is explained. First, in the case where the printing medium 208 is conveyed to a predetermined printing start position, the carriage 202 moves in the main scanning direction on the printing medium 208 along the guide shaft 203. During the movement, inks are ejected from the ejection ports of the print head. The ultraviolet light irradiation device 210 irradiates the ejected inks with ultraviolet light in accordance with the movement of the print head to cure and fix the ejected inks onto the printing medium. Then, in the case where the carriage 202 moves in the main scanning direction along the guide shaft 203 and reaches one end of the guide shaft 203, the carriage 202 moves in the direction perpendicular to the main scanning direction along the guide shaft 211 by a predetermined amount. The movement of the carriage 202 is referred to as a "sub scan" and the direction of the movement is referred to as a "sub scanning direction". After the carriage 202 moves in the sub scanning direction by a predetermined amount, the carriage 202 moves again in the main scanning direction along the guide shaft 203. By the carriage 202 of the print head repeating the main scan and the sub scan in this manner, a three-dimensional image including concavo-convex layers and color material layers is formed on the printing medium 208.

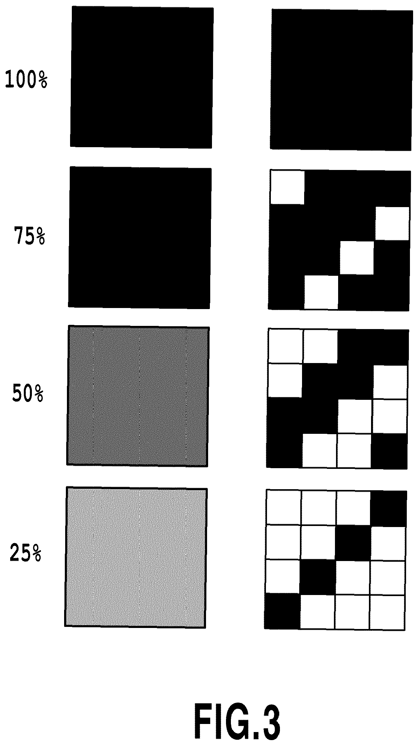

FIG. 3 is a diagram explaining representation of an image that is controlled by an area gradation method. In the present embodiment, for simplification of explanation, it is assumed that whether the ink is ejected (on) or not ejected (off) is controlled for each pixel defined by the output resolution of the image forming apparatus and the state where all the pixels within the area are turned on is regarded as the state where the density is 100%. With a so-called binary printer that controls the on/off states of the ink for each pixel, it is possible to represent one of the on state (density is 100%) and the off state (density is 0%) with one pixel, and therefore, a halftone is represented by a set of a plurality of pixels. Explanation is given using FIG. 3. Instead of representing a halftone by a density of 25% as shown on the bottom left in FIG. 3, the representation of a halftone is implemented by ejecting ink to four pixels of 16 pixels as shown on the bottom right in FIG. 3 to represent a density of 25% (= 4/16) in terms of area. It is also possible to represent another tone level similarly. The total number of pixels and the arrangement pattern of the on pixels within the area for representing a halftone are not limited to the example shown in FIG. 3. In general, the error diffusion method is made use of for the derivation of an arrangement pattern. In the present embodiment, ejection/non-ejection of ink droplet is controlled by two values, but it may also be possible to use the multi-droplet method of controlling the amount of ink droplet by multiple values and forming one dot by causing a plurality of ink droplets to land within one pixel on a printing medium from the same ejection port.

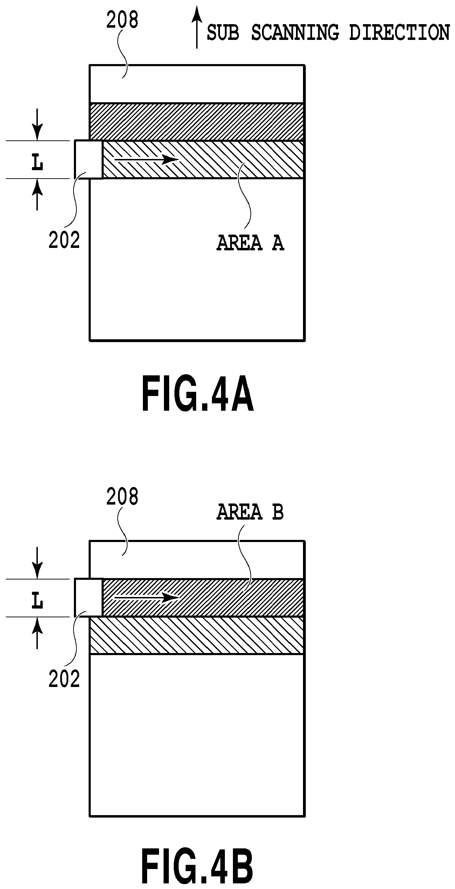

FIG. 4A and FIG. 4B are diagrams each explaining the operation to form a three-dimensional image by the carriage 202 scanning on the printing medium 208. By the main scan by the carriage 202, an image corresponding to a width L of the carriage 202 is formed and each time image formation of one line is completed, the carriage 202 is moved in the sub scanning by a distance L each time. In order to make explanation easy, the maximum ink amount that the image forming apparatus in the present embodiment can eject by one main scan is represented as an ink amount of 100%.

In the case where the layer to be formed requires an ink amount exceeding 100%, it is necessary to perform the scan (main scan) a plurality of times in the same area. For example, in the case where a layer is formed by an ink amount of 500% in a certain area, the same line is scanned five times. Explanation is given using FIG. 4A and FIG. 4B. In the case where a layer by an ink amount of 500% is formed in an area A and an area B, after scanning five times in the area A (FIG. 4A), the carriage 202 is conveyed by L in the sub scanning direction and the area B is scanned five times (FIG. 4B). It may also be possible to control the ink amount by increasing the number of times of ink ejection to the same position without increasing the number of times of scan.

### <Hardware configuration of image processing apparatus>

A hardware configuration example of the image processing apparatus 24 in the present embodiment is shown in FIG. 5. A control unit 220 includes a CPU 501, a ROM 502, a RAM 503, a general-purpose interface (hereinafter, also referred to as I/F) 504, a serial ATA (hereinafter, also referred to as SATA) I/F 505, and a video card (hereinafter, also referred to as VC) 506. These components constituting the control unit 220 are connected to one another via a system bus 507 and are capable of transmission and reception of information via the system bus 507.

The CPU 501 executes an operation system (OS) and various programs stored in the ROM 502, a hard disk drive (HDD) 510, various storage media mounted on a general-purpose drive 511, etc., by using the RAM 503 as a wok memory. Due to this, the CPU 501 controls each component via the system bus 507. The programs executed by the CPU 501 include programs for performing processing, to be described later, in the present embodiment. The general-purpose I/F 504 is, for example, a serial bus interface, such as USB. The control unit 220 is connected with an input device 509, such as a mouse and a keyboard, via a serial bus 508. To the SATA I/F 505, the HDD 510 and the general-purpose drive 511 that performs read and write of various storage media are connected. The CPU 501 performs read and write of data for the HDD 510 and various storage media mounted on the general-purpose drive 511. The VC 506 is a video interface and is connected with a display 512. The CPU 501 displays a user interface (hereinafter, also referred to as UI) that is provided by program execution on the display 512. Then, the CPU 501 receives user inputs including instructions of the user that are input by the user through the UI by using the input device 509.

### <Software configuration of control unit 220>

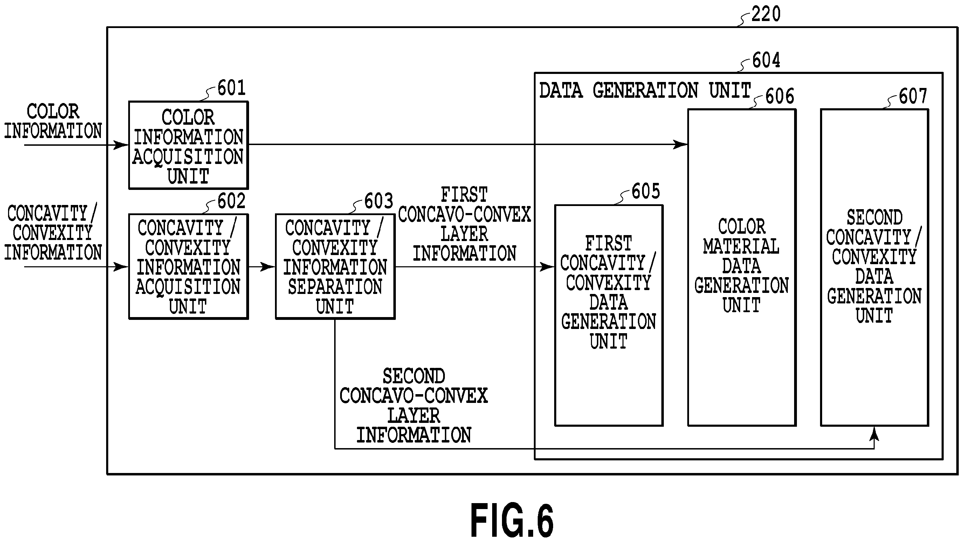

FIG. 6 is a block diagram showing a software configuration example of the control unit 220 in the present embodiment. As shown in FIG. 6, the control unit 220 includes a color information acquisition unit 601, a concavity / convexity information acquisition unit 602, a concavity / convexity information separation unit 603, and a data generation unit 604. The data generation unit 604 includes a first concavity / convexity data generation unit 605, a color material data generation unit 606, and a second concavity / convexity data generation unit 607. The color information acquisition unit 601 acquires color information and sends the acquired color information to the color material data generation unit 606. The color information is bitmap data including color values for each pixel. In the present embodiment, it is assumed that the color information has RGB values for each pixel, which are calculated from CIELAB values by the sRGB conversion formula. The concavity / convexity information acquisition unit 602 acquires concavity / convexity information representing concavities / convexities (shape) of a three-dimensional image desired to be output and sends the acquired concavity / convexity information to the concavity / convexity information separation unit 603. The concavity / convexity information is data describing a two-dimensional distribution of height. In the case where the three-dimensional image desired to be output is an oil painting, the concavity / convexity information is the height (also referred to as thickness) on a condition that the height of the canvas surface is taken to be 0. In the present embodiment, it is assumed that the concavity / convexity information is data of heights from the reference surface which each pixel holds as the pixel value, and is a gray scale image in which the height of each pixel is represented by an 8-bit pixel value. Hereinafter, this gray scale image is also referred to as a concavo-convex image.

The concavity / convexity information separation unit 603 receives the concavity / convexity information from the concavity / convexity information acquisition unit 602 and separates the received concavity / convexity information into first concavo-convex layer information for forming a first concavo-convex layer beneath a color material layer and second concavo-convex layer information for forming a second concavo-convex layer on the color material layer. Then, the concavity / convexity information separation unit 603 sends the first concavo-convex layer information to the first concavity / convexity data generation unit 605, and sends the second concavo-convex layer information to the second concavity / convexity data generation unit 607. Like the concavity / convexity information, the first concavo-convex layer information and the second concavo-convex layer information are data of heights from the reference surface which each pixel holds as the pixel value, and is a gray scale image in which the height of each pixel is represented by an 8-bit pixel value. The separation method of concavity / convexity information and details of the first concavo-convex layer information and the second concavo-convex layer information will be described later.

The first concavity / convexity data generation unit 605 receives the first concavo-convex layer information from the concavity / convexity information separation unit 603 and converts the received first concavo-convex layer information into first concavity / convexity data that the image forming apparatus 25 can output. Here, the first concavity / convexity data is divided into pieces of data corresponding to a plurality of times of scan in accordance with the height (thickness) that the image forming apparatus 25 can form by a single scan. The color material data generation unit 606 receives color information from the color information acquisition unit 601 and converts the received color information into color material data that the image forming apparatus 25 can output. Here, the image data including RGB values is converted into data of color materials (e.g., cyan, magenta, black, yellow) that the image forming apparatus 25 outputs. Further, after the color conversion into each color, various kinds of processing, such as halftone processing into the number of tone levels that the image forming apparatus 25 can output, are performed. The second concavity / convexity data generation unit 607 receives the second concavo-convex layer information from the concavity / convexity information separation unit 603 and converts the received second concavo-convex layer information into second concavity / convexity data that the image forming apparatus 25 can output. The image forming apparatus 25 acquires the first concavity / convexity data, the color material data, and the second concavity / convexity data that are generated in the image processing apparatus. The image forming apparatus 25 forms a three-dimensional image on a printing medium based on the acquired data.

### <Processing in the present embodiment>

Hereinafter, an outline of the processing in the present embodiment, which is performed by the above-described ink jet printer, is explained. The fact has been described previously that the portion 103 where the color material layer is thin will appear because the entire concavo-convex surface is not coated in the case where colors and concavities / convexities are reproduced by the layer stacking method and on a condition that the inclination angle β of the slope is large as shown in FIG. 1C. On the other hand, in the case where the inclination angle α of the slope is small as shown in FIG. 1B, the entire concavo-convex surface is coated and the thickness of the color material layer will become substantially the same. The image processing apparatus according to the present embodiment generates data for forming a three-dimensional image by taking into consideration this characteristic.

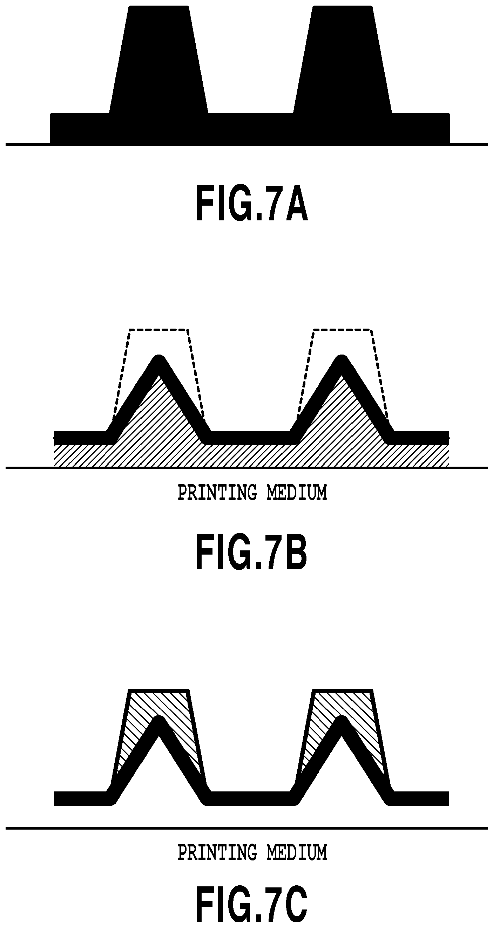

FIG. 7A to FIG. 7C are conceptual diagrams of the processing in the present embodiment. FIG. 7A is a section diagram showing an example of a concavo-convex shape that is reproduced by concavity / convexity information that the concavity / convexity information acquisition unit 602 acquires. The concavity / convexity information separation unit 603 separates the concavity / convexity information, for example, into the first concavo-convex layer information for reproducing the concavo-convex shape shown by slashes in FIG. 7B and the second concavo-convex layer information for reproducing the concavo-convex shape shown by slashes in FIG. 7C. Here, the concavo-convex shape that is reproduced by the first concavo-convex layer information is a shape onto which ink can settle because the inclination angle of the slope is small as shown in FIG. 7B. On the other hand, as shown in FIG. 7C, the concavo-convex shape that is reproduced by the second concavo-convex layer information is a shape that is a difference between the concavo-convex shape shown in FIG. 7A and the concavo-convex shape shown in FIG. 7B. In the present embodiment, explanation is given on the assumption that the first concavo-convex layer is formed by using a clear ink, which is the UV curable colorless transparent liquid resin and that the first concavity / convexity data is bitmap data in which the pixel value of each pixel is the clear ink amount in accordance with the height of concavities / convexities. However, the ink used to form the fist concavo-convex layer is not limited to this ink. For example, the clear ink amount may be a color ink amount, such as a white ink amount. The color material layer data is the ink amounts of colors, such as a cyan, magenta, yellow, black, and white. It is desirable that the second concavo-convex layer be formed by the clear ink, which is the UV curable colorless transparent liquid resin, in order not to block observation of the color material layer.

As explained above, in the present embodiment, the first concavo-convex layer having an inclination angle that enables the color material to settle is formed beneath the color material layer. Then, by forming the color material layer and the second concavo-convex layer on the first concavo-convex layer, a three-dimensional image is formed, and thereby, the colors and concavities / convexities are reproduced on a printing medium. From the standpoint of reproducibility of concavities / convexities, it is desirable that the liquid drop size be less than or equal to 50 pl in the case where the height is controlled in the vicinity of 80 µm, and the liquid drop size be less than or equal to 90 pl in the case where the height is controlled in the vicinity of 100 µm. Consequently, in the case where the concavo-convex layer consisting of the first concavo-convex layer and the second concavo-convex layer becomes about several hundred µm to several mm thick, the object to be reproduced will seem unnatural, and therefore, it is desirable that both the fist concavo-convex layer and the second concavo-convex layer be formed with a liquid drop size of 50 pl or less.

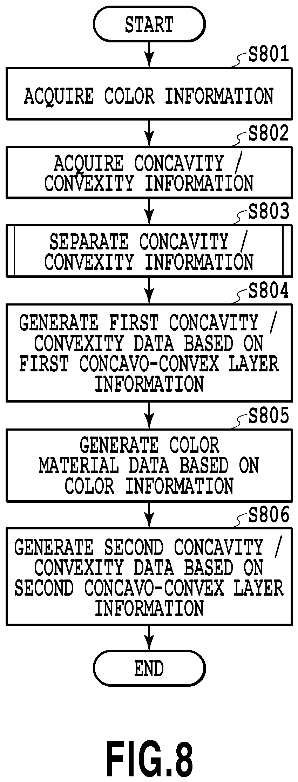

Hereinafter, the processing in the present embodiment that is performed by the above-described image processing apparatus 24 is explained using FIG. 8. Each unit shown in FIG. 6 is implemented by the CPU 501 reading and executing the program corresponding to the flowchart shown in FIG. 8. At step S801, the color information acquisition unit 601 acquires color information on the reproduction target. The color information acquired at this step is sent to the color material data generation unit 606. At step S802, the concavity / convexity information acquisition unit 602 acquires concavity / convexity information (concavo-convex image) on the reproduction target. The concavity / convexity information acquired at this step is sent to the concavity / convexity information separation unit 603. As described previously, the concavity / convexity information is data of heights from the reference surface which each pixel holds as the pixel value, and is a gray scale image in which the height of each pixel is represented by an 8-bit pixel value.

At step S803, the concavity / convexity information separation unit 603 calculates the inclination angle of the concavo-convex image for each pixel and separates the concavity / convexity information into the first concavo-convex layer information and the second concavo-convex layer information based on the calculated inclination angle. After the separation, the first concavo-convex layer information is sent to the first concavity / convexity data generation unit 605 and the second concavo-convex layer information is sent to the second concavity / convexity data generation unit 607. Details of step S803 will be described later.

At step S804, the first concavity / convexity data generation unit 605 generates first concavity / convexity data for constructing part of the reproduction-target concavities / convexities based on the first concavo-convex layer information. In the present embodiment, the pixel value of the first concavo-convex layer information represented by an 8-bit gray scale is normalized in the range of 0 to 1 (0% to 100%) and the normalized pixel value is associated with the ink amount. For example, a pixel value of 255 in the first concavo-convex layer information corresponds to an ink amount of 100% and a pixel value of 128 corresponds to an ink amount of 50%. Here, in accordance with the ejected ink amount, a layer that is formed has a certain thickness, i.e., a certain height. Consequently, for example, in the case where a layer formed by an ink amount of 100% has a thickness of 20 µm, it is necessary to stack the layer formed by an ink amount of 100% five times in order to reproduce a height of 100 µm. In other words, in this case, the first concavo-convex layer having a height of 100 µm is formed by performing the main scan five times with an ink amount of 100%.

At step S805, the color material data generation unit 606 generates color material data having, as a pixel value, an ink amount for forming a color material layer that is formed by color ink based on the color information. The color material data is generated so as to include an ink amount of a spot color ink for hiding the background in order to suppress the influence of the change in color due to a printing medium. In the present embodiment, it is assumed that the color material data is data of five channels in total storing the ink amount of a white ink as a spot color ink for hiding the background, in addition to the ink amounts of cyan, magenta, yellow, and black described previously. At step S806, the second concavity / convexity data generation unit 607 generates second concavity / convexity data for constructing the second concavo-convex layer the inclination angle of which is larger than that of the first concavo-convex layer based on the second concavo-convex layer information. In the case where the second concavity/convexity data is generated, as in the case where the first concavo-convex layer is formed, the ink amount is derived from the pixel value in the second concavo-convex layer information (gray scale image) based on the correspondence relationship between the height and the ink amount. After the above processing is completed, the image processing apparatus 24 outputs the first concavity / convexity data, the color material data, and the second concavity / convexity data to the image forming apparatus 25.

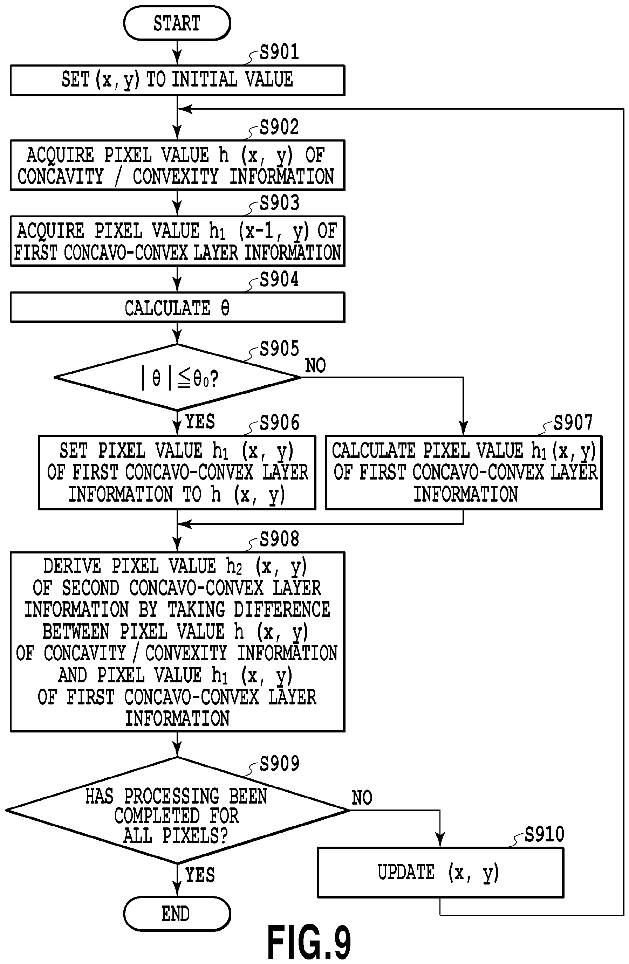

Hereinafter, separation processing of concavity / convexity information (step S803 in FIG. 8) is explained in detail using FIG. 9. At step S901, the concavity / convexity information separation unit 603 sets a variable (x, y) representing the pixel position to (0, 0), which is the initial value. At step S902, the concavity / convexity information separation unit 603 acquires a pixel value h (x, y) at coordinates (x, y) of the concavity / convexity information.

At step S903, the concavity / convexity information separation unit 603 acquires a pixel value h₁ (x-1, y) at coordinates (x-1, y) of the first concavo-convex layer information. However, in the case where x = 0, the corresponding pixel value does not exist, and therefore, the pixel value h₁ (x-1, y) is found by expression (1) below. ${h}_{1} \left(x-1, y\right) = h \left(0, y\right) \left(in the case where x=0\right)$

At step S904, the concavity / convexity information separation unit 603 calculates an inclination angle θ based on h (x, y) acquired at step S902 and h₁ (x-1, y) acquired at step S903 by using expression (2) below. In expression (2), R is the resolution (dpi) of the concavity / convexity information (gray scale image). Further, hₘₐₓ is the height (mm) corresponding to the maximum pixel value that the pixel value can take in the concavity / convexity information (the maximum value is 255 because the concavity / convexity information is a gray scale image represented by an 8-bit pixel value in the present embodiment). $θ = {tan}^{- 1} \left[\frac{\left\{h\left(x, y\right)-{h}_{1}\left(x-1,y\right)\right\} \times {h}_{max}}{255}\times \frac{25.4}{R}\right] \times \frac{180}{π}$

At step S905, the concavity / convexity information separation unit 603 determines whether or not the absolute value |θ| of the inclination calculated at step S904 is less than or equal to a predefined threshold angle θ₀ by expression (3) below. In the case where the concavity / convexity information separation unit 603 determines that the absolute value |θ| of the inclination satisfies expression (3), the processing proceeds to step S906 and in the case where the concavity / convexity information separation unit 603 determines that the absolute value |θ| of the inclination does not satisfy expression (3), the processing proceeds to step S907. Here, θ₀ is an angle at which the slope of the first concavo-convex layer can be coated with color ink and the color is viewed appropriately in the reproduced object. Particularly, it is desirable that θ₀ be the maximum angle of the angles such as the above. $\left|θ\right| \leq {θ}_{0}$

In the present embodiment, the threshold angle θ₀ is determined in advance by outputting triangular waveform patterns having a variety of inclination angles and by observing three-dimensional images formed by ejecting color ink thereon. The reason is that it is possible to estimate the coated state on the slope of the first concavo-convex layer based on the results of the observation such as this. However, the method of determining θ₀ is not limited to the method described previously. For example, in the case of a shape the inclination angle of which is controlled, the shape of the first concavo-convex layer does not need to be a triangular waveform. Further, it may also be possible for a use to directly specify θ₀.

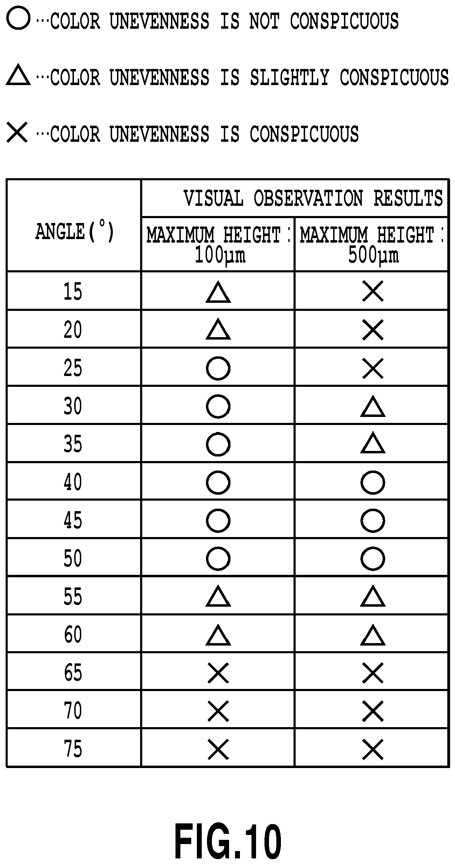

In the present embodiment, the threshold angle θ₀ is determined by observing three-dimensional images formed by ejecting color ink on 13 kinds of triangular waveform patterns in which the inclination angle is changed by 5° each time the inclination angle is changed in the range from 15° to 75°. Specifically, the 13 kinds of patterns described previously are formed by a colorless transparent liquid resin ink and each pattern of the 13 kinds of patterns that are formed is coated with the color material layer formed by color ink. Then, on the color material layer, a layer is formed by the colorless transparent liquid resin ink so that the maximum height of the three-dimensional image having a three-layer structure becomes 100 µm or 500 µm. The three-dimensional images thus formed are observed visually. FIG. 10 is a diagram showing the results of the observation. As shown in FIG. 10, both in the case where the maximum height is 100 µm and in the case where the maximum height is 500 µm, on a condition that the inclination angle is more than or equal to 65°, the results are that color unevenness is conspicuous. The reason is that the thickness of the color material layer on the layer of the triangular waveform pattern is no longer uniform in the case where the inclination angle is more than or equal to 65°, and therefore, the density unevenness of color ink occurs. On the other hand, in the case where the inclination angle is small, the triangular waveform pattern is coated with the color material layer (color ink), but resulting from that the thickness of the uppermost layer that is formed by the colorless transparent liquid resin ink becoming great, the phenomenon in which the color seems cloudy was observed. This phenomenon is particularly noticeable in the case where the maximum height is 500 µm, and the results are that color unevenness is conspicuous in the case where the inclination angle is less than or equal to 25°. From the above results, preferably, θ₀ is a value within the range not less than 30° and not more than 60°, and more preferably, θ₀ is a value within the range not less than 40°and not more than 50°. In the present embodiment, θ₀ is taken to be 45° (θ₀ = 45°) .

At step S906, the concavity / convexity information separation unit 603 takes the pixel value h₁ (x, y) at the coordinates (x, y) of the first concavo-convex layer information to be the pixel value h (x, y) of the concavity / convexity information as shown in expression (4). At step S905 in the previous stage, it is determined that the absolute value of θ is less than or equal to θ₀. i.e., it is determined that the color can be reproduced appropriately in the case where coating by color ink is performed for the concavities / convexities that are reproduced based on the concavity / convexity information. Consequently, at this step, the pixel value h (x, y) of the concavo-convex layer information is used as the pixel value h₁ (x, y) of the first concavo-convex layer information as it is. ${h}_{1} \left(x, y\right) = h \left(x, y\right)$

At step S907, the concavity / convexity information separation unit 603 calculates the pixel value h₁ (x, y) at the coordinates (x, y) of the first concavo-convex layer information by expression (5) or expression (6). At step S905 in the previous stage, it is determined that the absolute value of θ is greater than θ₀. i.e., it is determined that it is difficult to appropriately reproduce the color in the case where coating by color ink is performed for the concavities / convexities that are reproduced based on the concavity / convexity information. Consequently, at this step, the pixel value h₁ of the first concavo-convex layer information is generated so that the slope has the angle θ₀ at which coating is possible. ${h}_{1} \left(x, y\right) = {h}_{1} \left(x-1,y\right) + \frac{25.4 ⁢ tan {θ}_{0}}{R} \times \frac{255}{{h}_{max}} \left(in the case where θ>0\right)$ ${h}_{1} \left(x, y\right) = {h}_{1} \left(x-1,y\right) + \frac{25.4 ⁢ tan \left(-{θ}_{0}\right)}{R} \times \frac{255}{{h}_{max}} \left(in the case where θ\leq 0\right)$

At step S908, the concavity / convexity information separation unit 603 finds a pixel value h₂ (x, y) at the coordinates (x, y) of second concavo-convex layer information by taking a difference between the pixel value h (x, y) of the concavity / convexity information and the pixel value h₁ (x, y) of the first concavo-convexity layer information as expressed by expression (7). ${h}_{2} \left(x, y\right) = h \left(x, y\right) - {h}_{1} \left(x, y\right)$

At step S909, the concavity / convexity information separation unit 603 determines whether or not the processing to find the pixel values h₁ and h₂ has been completed for all the pixels. In the case where the concavity / convexity information separation unit 603 determines that the processing to find the pixel values h₁ and h₂ has been completed for all the pixels, the processing at S803 is completed. On the other hand, in the case where the concavity / convexity information separation unit 603 determines that the processing to find the pixel values h₁ and h₂ has not been completed for all the pixels, the processing proceeds to step S910. At step S910, the concavity / convexity information separation unit 603 updates the variable (x, y) representing the pixel position in order to find the pixel values h₁ and h₂ for the pixel on which the processing has not been performed yet. Next, the processing returns to step S902.

As above, the separation processing of the concavity / convexity information at step S803 is explained in detail. By performing the above-described processing, it is possible to separate the concavity / convexity information into the first concavo-convex layer information for forming the first concavo-convex layer, on which the color material layer having substantially the uniform thickness can be formed, and the second concavo-convex layer information for forming the second concavo-convex layer, on which it is difficult to form the color material layer having substantially the uniform thickness.

According to the present embodiment, the concavity / convexity information is separated into the first concavo-convex layer information for forming the first concavo-convex layer beneath the color material layer and the second concavo-convex layer information for forming the second concavo-convex layer on the color material layer. Then, the first concavity / convexity data for forming the first concavo-convex layer beneath the color material layer, the color material data based on the color information, and the second concavity/convexity data for forming the second concavo-convex layer on the color material layer are generated. Due to this, even in the case where there is a steep slope on the surface of the reproduced object, it is made possible to prevent color reproduction accuracy from being reduced. Further, at this time, the shape of the second concavo-convex layer is a shape that is a difference between the shape of the reproduction-target concavities / convexities and the shape of the first concavo-convex layer, and the thickness of the second concavo-convex layer that is stacked on the color material layer is less than that of the first concavo-convex layer. Consequently, the amount of deviation in the position of the light that is reflected from the color material layer becomes smaller, which results from the refraction of the light that occurs in the second concavo-convex layer on the surface, and therefore, it is made possible to favorably reproduce the concavities / convexities and the colors.

At the pixel position at which the absolute value of θ is determined to be less than or equal to θ₀ at step S905, the concavities / convexities that are reproduced based on the concavity / convexity information can be reproduced by the first concavo-convex layer alone that is formed based on the first concavo-convex layer information. Consequently, the three-dimensional image formed by the image forming apparatus 25 is formed by the two layers, i.e., the first concavo-convex layer and the color material layer, in the area where the absolute value of the inclination angle is less than or equal to the threshold angle (|θ|≤ θ₀). On the other hand, in the area where the absolute value of the inclination angle is greater than the threshold angle (|θ| > θ₀), the three-dimensional image is formed by the three layers, i.e., the first concavo-convex layer, the color material layer, and the second concavo-convex layer.

Further, in the present embodiment, the color information and the second concavo-convex layer information are handled independently of each other. However, there is a case where the appearance of a color varies depending on the thickness of the second concavo-convex layer that is controlled based on the second concavo-convex layer information. Consequently, it may also be possible to adjust the color information in accordance with the thickness of the second concavo-convex layer. In this case, it is sufficient to perform color conversion based on the relationship between the amount of colorless transparent liquid resin ink to be ejected, which is necessary to form the second concavo-convex layer, and the color ink.

Further, in the present embodiment, the case is explained where the concavity / convexity information is separated into the two pieces of concavo-convex layer information: the first concavo-convex layer information and the second concavo-convex layer information. However, it may also be possible to separate the concavity / convexity information into three or more pieces of concavo-convex layer information. It is also possible to apply the present embodiment to the case where the concavity / convexity information is separated into three or more pieces of concavo-convex layer information, provided that the lowermost layer and the uppermost layer are concavo-convex layers and the color material layer is formed therebetween.

### [Second embodiment]

In the first embodiment, the inclination angle θ of the slope is calculated for each pixel and the concavity / convexity information is separated into the first concavo-convex layer information and the second concavo-convex layer information. However, the method of separating concavity / convexity information is not limited to the method that uses the inclination angle. For example, in the case where concavity / convexity information is frequency-resolved, there is a tendency for the low-frequency component to include many gradual shapes and for the high-frequency component to include many steep shapes. Consequently, it is also possible to obtain the same effects as those of the first embodiment by separating concavity / convexity information in accordance with the frequency component. Hereinafter, the case is explained where concavity / convexity information is separated into the low-frequency component and the high-frequency component. However, in the following explanation, explanation of the contents in common to those of the first embodiment is simplified or omitted.

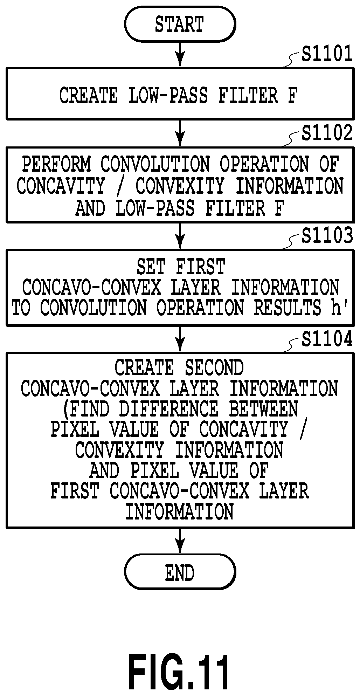

Hereinafter, separation processing of concavity / convexity information (step S803 in FIG. 8) in the second embodiment is explained in detail using FIG. 11. At step S1101, the concavity / convexity information separation unit 603 calculates a Gaussian filter F (a, b) by expression (8) below as a low-pass filter. $F \left(a, b\right) = exp \left\{-\frac{{a}^{2} + {b}^{2}}{2 {\left(\frac{S}{2}\right)}^{2}}\right\}$

A variance S of the Gaussian filter in expression (8) is calculated by expression (9) below by using the resolution R of concavity / convexity information (gray scale image). $S = 0.1 \times R / 25.4 + 0.5 \left(the fractional part is rounded down\right)$

In the present embodiment, the concavity / convexity space period more than or equal to 0.1 mm is regarded as a low frequency and a filter for extracting the frequency component less than or equal to the concavity / convexity space frequency corresponding thereto is created, but the frequency component is not limited to this example. For example, it may also be possible for a user to specify the frequency component.

At step S1102, the concavity / convexity information separation unit 603 performs a convolution operation of the concavity / convexity information and the low-pass filter created at step S1101 in accordance with expression (10) below. $\begin{matrix}h ′ \left(i, j\right) = {\sum }_{a = - S}^{S} {\sum }_{b = - S}^{S} h \left(i-a,j-b\right) F \left(a, b\right) & i = 0 , .. , M - 1 , j = 0 , .. , N - 1\end{matrix}$

In expression (10), M is the number of pixels in the horizontal direction of the concavity / convexity information (gray scale image) and N is the number of pixels in the vertical direction of the concavity / convexity information (gray scale image). At step S1103, the concavity / convexity information separation unit 603 sets the first concavo-convex layer information to convolution operation results h' that are found at step S1102.

At step S1104, the concavity / convexity information separation unit 603 calculates a difference between the pixel value h (x, y) of the concavity / convexity information and the pixel value h₁ (x, y) of the first concavo-convex layer information that is found at step S1103 and finds the pixel value h₂ (x, y) of the second concavo-convex layer information for each pixel. Due to this, the concavity / convexity information separation unit 603 creates the second concavo-convex layer information. By the present embodiment, it is made possible to prevent color reproduction accuracy from being reduced even in the case where there is a steep slope on the surface of the reproduced object. Further, in the present embodiment, the concavity / convexity information is separated into the first concavo-convex layer information and the second concavo-convex layer information without using the inclination angle of the slope. Consequently, it is not necessary to perform in advance the process (observation or the like) to determine the threshold angle θ₀ as described in the first embodiment.

### [Third embodiment]

In the first and second embodiments, the concavity / convexity information is separated into the first concavo-convex layer information and the second concavo-convex layer information and the data for forming the first concavo-convex layer and the second concavo-convex layer is generated by using the colorless transparent liquid resin ink. Further, at this time, concavities / convexities and colors are reproduced by forming the color material layer of color ink between the first concavo-convex layer and the second concavo-convex layer.

On the other hand, it is also possible to reproduce colors while reproducing concavities / convexities having steep inclination angles by forming the concavo-convex layer by using color ink in place of the colorless transparent liquid resin ink. However, in the case where concavities / convexities are reproduced by color ink, there is a possibility that a desired color cannot be reproduced because of the change in density caused by stacking a plurality of color material layers. For example, in reproducing an object that is a single color and the thickness of which varies, in the case where an attempt is made to reproduce concavities / convexities by color ink alone, there is a possibility that the appearance of a color will be different between the portion where the thickness of the color material layer is small and the portion where the thickness of the color material layer is great.

In view of the above-described contents, in the present embodiment, both the methods are used: the method of reproducing concavities / convexities and colors by the colorless transparent liquid resin ink and color ink as in the first and second embodiment and the method of reproducing concavities / convexities and colors by color ink alone. Hereinafter, the present embodiment is explained in detail. However, in the following explanation, explanation of the contents in common to those of the first and second embodiments is simplified or omitted.

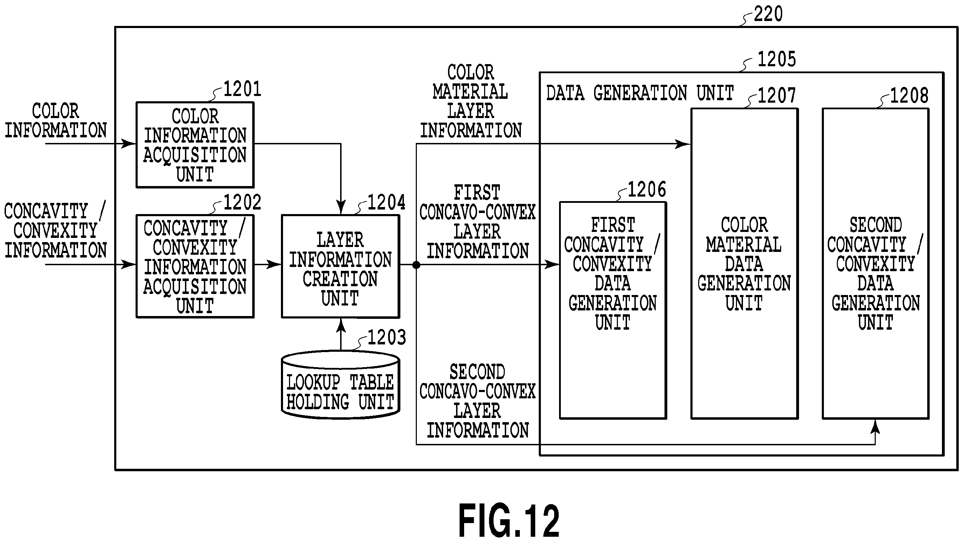

FIG. 12 is a block diagram showing a software configuration example of the control unit 220 in the present embodiment. As shown in FIG. 12, the control unit 220 includes a color information acquisition unit 1201, a concavity / convexity information acquisition unit 1202, a lookup table (hereinafter, also referred to as LUT) holding unit 1203, a layer information creation unit 1204, and a data generation unit 1205. The data generation unit 1205 includes a first concavity / convexity data generation unit 1206, a color material data generation unit 1207, and a second concavity / convexity data generation unit 1208.

The color information acquisition unit 1201 and the concavity / convexity information acquisition unit 1202 are the same as the color information acquisition unit 601 and the concavity / convexity information acquisition unit 602 of the first embodiment, and therefore, explanation thereof is omitted. The LUT holding unit 1203 holds an LUT. Details of the LUT held by the LUT holding unit 1203 will be described later. The layer information creation unit 1204 receives concavity / convexity information from the concavity / convexity information acquisition unit 1202 as well as receiving color information from the color information acquisition unit 1201. Then, the layer information creation unit 1204 creates color material layer information, first concavo-convex layer information, and second concavo-convex layer information based on the received color information and concavity / convexity information by using the LUT held by the LUT holding unit 1203. Then, the layer information creation unit 1204 sends the first concavo-convex layer information to the first concavity / convexity data generation unit 1206, the color material layer information to the color material data generation unit 1207, and the second concavo-convex layer information to the second concavity / convexity data generation unit 1208. The color material layer information is data that is used for forming a color material layer and is data that includes the color value and the number of times of stacking, which indicates the number of stacked layers of color ink, for each pixel. The first concavo-convex layer information and the second concavo-convex layer information are the same as those of the first embodiment.

The first concavity / convexity data generation unit 1206 receives the first concavo-convex layer information from the layer information creation unit 1204 and generates first concavity / convexity data based on the received first concavo-convex layer information. The color material data generation unit 1207 receives the color material layer information from the layer information creation unit 1204 and generates color material data based on the received color material layer information. The second concavity / convexity data generation unit 1208 receives the second concavo-convex layer information from the layer information creation unit 1204 and generates second concavity / convexity data based on the received second concavo-convex layer information.

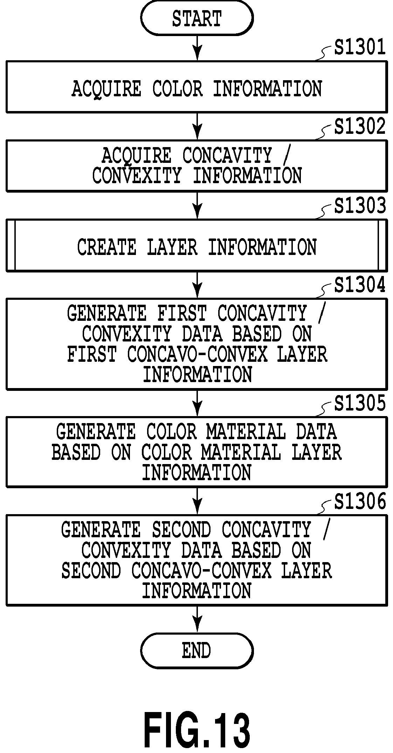

Hereinafter, processing that is performed by the image processing apparatus 24 in the present embodiment is explained using FIG. 13. Step S1301 and step S1302 are the same as step S801 and step S802 in the first embodiment, and therefore, explanation thereof is omitted.

At step S1303, the layer information creation unit 1204 creates layer information based on the color information acquired at step S1301 and the concavity / convexity information acquired at step S1302 by using the LUT held by the LUT holding unit 1203. The layer information referred to here includes the color material layer information used for forming a color material layer that is formed by color ink, and the first concavo-convex layer information and the second concavo-convex layer information used for forming the first concavo-convex layer and the second concavo-convex layer that are formed by the colorless transparent liquid resin ink. Details of step S1303 will be described later.

At step S1304, the first concavity / convexity data generation unit 1206 generates the first concavity / convexity data for constructing part of the reproduction-target concavities / convexities based on the first concavo-convex layer information created at step S1303. At step S1305, the color material data generation unit 1207 generates the color material data based on the color material layer information created at step S1303 . As described previously, in the present embodiment, the reproduction-target color is reproduced by the color material layer, but as the case may be, the reproduction-target concavities / convexities are also reproduced by the color material layer. At step S1306, the second concavity / convexity data generation unit 1208 generates the second concavity / convexity data for constructing part of the reproduction-target concavities / convexities based on the second concavo-convex layer information created at step S1303.

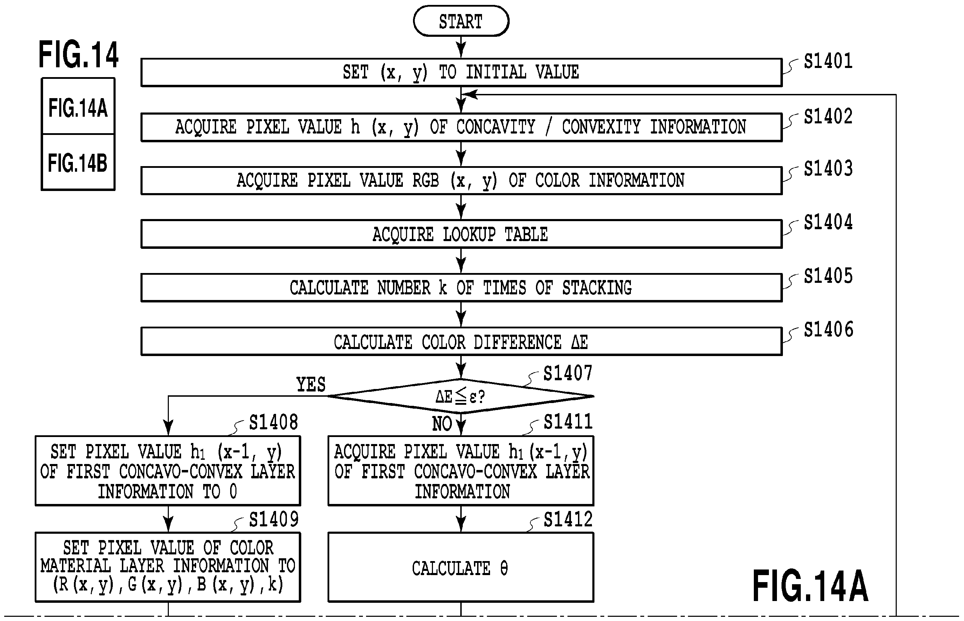

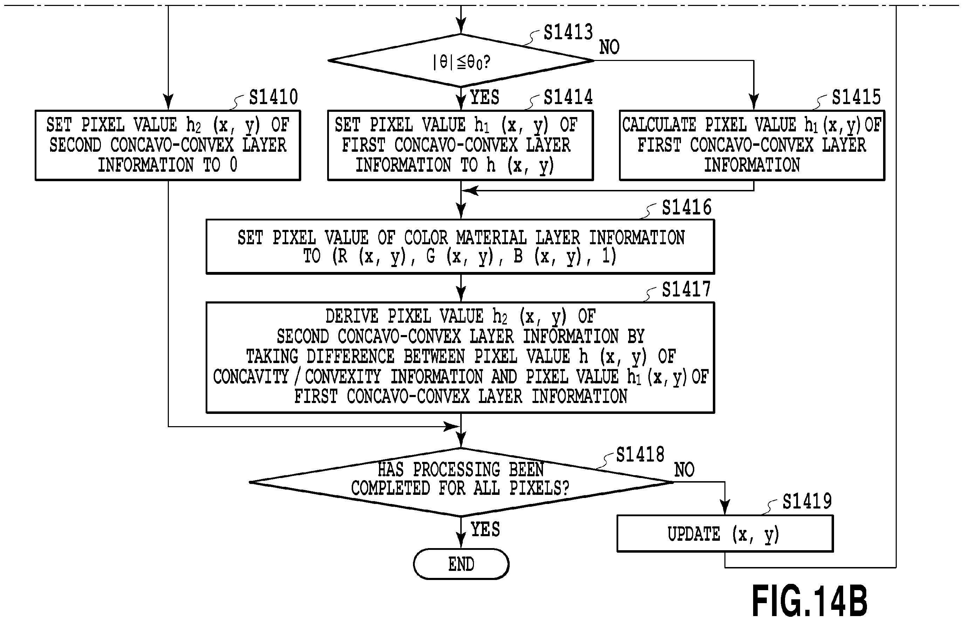

Hereinafter, creation processing of the layer information (step S1303 in FIG. 13) is explained using FIGs. 14A and 14B. At step S1401, the layer information creation unit 1204 sets the variable (x, y) representing the pixel position to (0, 0), which is the initial value. At step S1402, the layer information creation unit 1204 acquires the pixel value h (x, y) at the coordinates (x, y) of the concavity / convexity information. At step S1403, the layer information creation unit 1204 acquires a pixel value RGB (x, y) at the coordinates (x, y) of the color information.

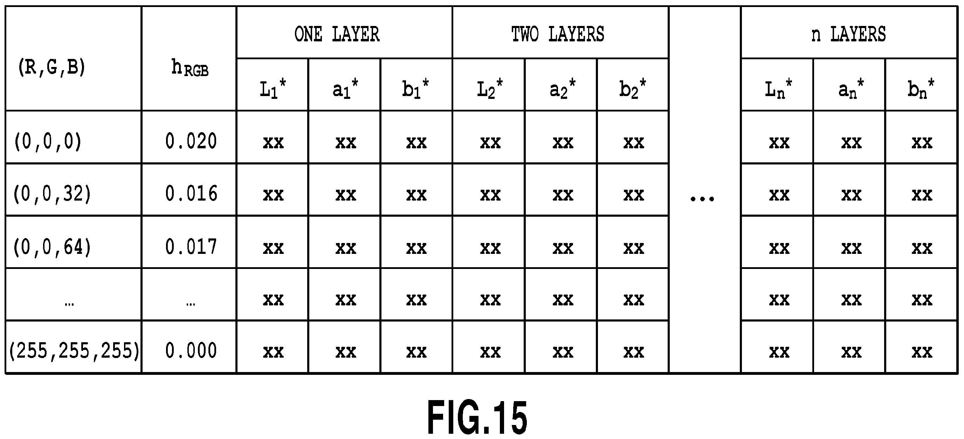

At step S1404, the layer information creation unit 1204 acquires the LUT from the LUT holding unit 1203. Here, an example of the LUT that is held by the LUT holding unit 1203 is shown in FIG. 15. As shown in FIG. 15, in the LUT, combinations of colors of RGB each having nine tone levels at equal intervals are held. Here, h_{RGB} represents the height (mm) of one color material layer formed by the color ink of each of RGB values. In the LUT, CIELab values measured by forming color material layers with one to a plurality of layers by the color ink of each of RGB values are also held. In the present embodiment, the number of tone levels of the RGB values is taken to be nine, respectively, but the number of tone levels is not limited to this example. Further, as the height of the color material layer that is formed by the color ink of each of RGB values, the height h_{RGB} of one color material layer is used, but it may also be possible to use the height of a plurality of (e.g., two) color material layers as the height of the color material layer that is formed by the color ink of each of RGB values.

At step S1405, the layer information creation unit 1204 calculates a number k of times of stacking of color ink by expression (11), which is necessary to reproduce the height indicated by h (x, y) acquired at step S1402 by the color ink corresponding to RGB (x, y) acquired at step S1403. $k = \frac{\frac{h \left(x, y\right)}{255} \times {h}_{max}}{{h}_{RGB}} \left(the fractional part is rounded down\right)$ Here, hₘₐₓ is the height (mm) corresponding to the maximum pixel value that the pixel value can take in the concavity / convexity information as in the first embodiment.

At step S1406, the layer information creation unit 1204 acquires the Lab values in the case where one layer is stacked and the Lab values in the case where k layers are stacked by referring to the LUT acquired at step S1404 for the ink corresponding to RGB (x, y) acquired at step S1403. Then, the layer information creation unit 1204 calculates a color difference ΔE based on the acquired Lab values by using expression (12). $Δ ⁢ E = \sqrt{{\left({L}_{1}^{∗}-{L}_{k}^{∗}\right)}^{2} + {\left({a}_{1}^{∗}-{a}_{k}^{∗}\right)}^{2} + {\left({b}_{1}^{∗}-{b}_{k}^{∗}\right)}^{2}}$

At step S1407, the layer information creation unit 1204 determines whether or not the color difference ΔE calculated at step S1406 is less than or equal to a predetermined threshold value ε by expression (13). In the present embodiment, ε is assumed to be 3.2. In the case where the layer information creation unit 1204 determines that expression (13) is satisfied, the change in color does not occur even by stacking a plurality of layers of the color ink, and therefore, it is determined that the reproduction-target concavities / convexities can be reproduced by the color ink alone. At this time, the processing proceeds to step S1408. On the other hand, in the case where the layer information creation unit 1204 determines that expression (13) is not satisfied, it is determined that the color changes on a condition that a plurality of layers of the color ink is stacked. At this time, the processing proceeds to step S1411. The processing at step S1411 and subsequent steps is the processing to generate the first concavo-convex layer information for forming the first concavo-convex layer beneath the color material layer and the second concavo-convex layer information for forming the second concavo-convex layer on the color material layer based on the concavity / convexity information in order to reproduce the reproduction-target concavities / convexities as in the first embodiment. In the present embodiment, ε is assumed to be 3.2, but it may also be possible to use another value. $Δ ⁢ E \leq ε$

At step S1408, the layer information creation unit 1204 sets the pixel value h₁ (x, y) at the coordinates (x, y) of the first concavo-convex layer information to 0. At step S1409, the layer information creation unit 1204 sets the pixel value at the coordinates (x, y) of the color material layer information to (R (x, y), G (x, y), B (x, y), k). At step S1410, the layer information creation unit 1204 sets the pixel value h₂ (x, y) at the coordinates (x, y) of the second concavo-convex layer information to 0. The processing at step S1411 to step S1419 is substantially the same as that in the first embodiment.

At step S1411, the layer information creation unit 1204 acquires the pixel value h₁ (x-1, y) at the coordinates (x-1, y) of the first concavo-convex layer information. However, in the case where x = 0, the pixel value h₁ (x-1, y) is found by expression (1). At step S1412, the layer information creation unit 1204 calculates the inclination angle θ by expression (2) based on h (x, y) acquired at step S1402 and h₁ (x-1, y) acquired at step S1411. At step S1413, the layer information creation unit 1204 determines whether or not the absolute value |θ| of the inclination calculated at step S1412 is less than or equal to the predetermined threshold angle θ₀ by expression (3). At step S1414, the layer information creation unit 1204 sets the pixel value h₁ (x, y) at the coordinates (x, y) of the first concavo-convex layer information to the pixel value h (x, y) of the concavity / convexity information acquired at step S1402.

At step S1415, the layer information creation unit 1204 calculates the pixel value h₁ (x, y) at the coordinates (x, y) of the first concavo-convex layer information by expression (5) or expression (6). At step S1416, the layer information creation unit 1204 sets the pixel value at the coordinates (x, y) of the color material layer information to (R (x, y), G (x, y), B (x, y), 1). At step S1417, the layer information creation unit 1204 finds the pixel value h₂ (x, y) at the coordinates (x, y) of the second concavo-convex layer information by taking a difference between the pixel value h (x, y) of the concavity / convexity information and the pixel value h₁ (x, y) of the first concavo-convex layer information. At step S1418, the layer information creation unit 1204 determines whether or not the processing to find the pixel values h₁ and h₂ has been completed for all the pixels. At step S1419, the layer information creation unit 1204 updates the variable (x, y) representing the pixel position in order to find the pixel values h₁ and h₂ for the pixel on which the processing has not been performed yet.

By the present embodiment, even in the case where there is a steep slope on the surface of the reproduction target, it is made possible to prevent color reproduction accuracy from being reduced. Further, in the present embodiment, part of the concavities / convexities are reproduced by the color ink, and therefore, it is possible to reduce the amount of consumed colorless transparent liquid resin ink accordingly.

### [Fourth embodiment]

In the first and second embodiments, concavities / convexities and colors are reproduced by separating the concavity / convexity information into the first concavo-convex layer information and the second concavo-convex layer information and by forming the color material layer of the color ink between the first concavo-convex layer and the second concavo-convex layer. However, the uppermost layer of a three-dimensional image that is formed does not necessarily need to be the second concavo-convex layer. For example, it may also be possible to form a gloss control layer for controlling gloss on the second concavo-convex layer. In the present embodiment, the case is explained where a gloss control layer is further formed on the second concavo-convex layer. However, in the following explanation, explanation of the contents in common to those of the first to third embodiments is simplified or omitted.

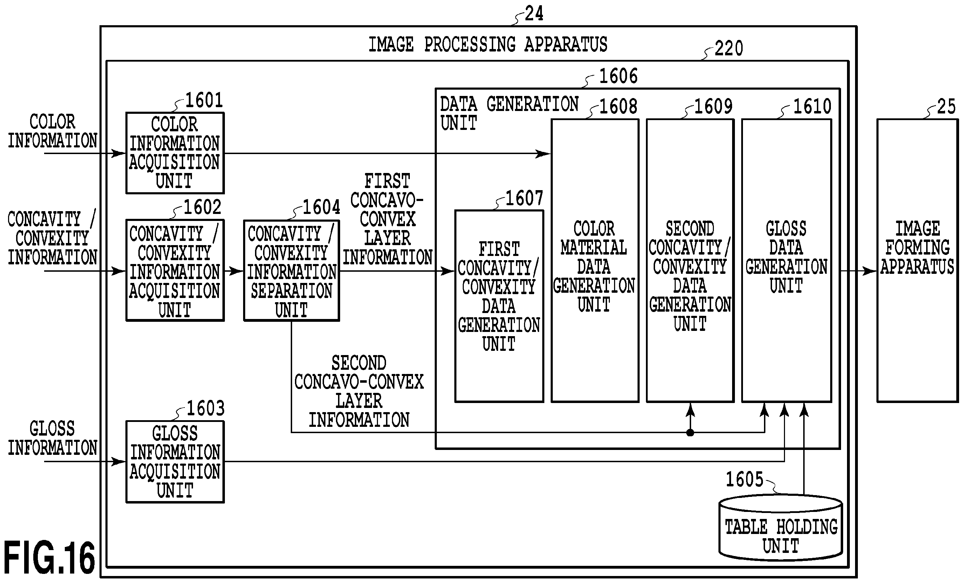

FIG. 16 is a block diagram showing a software configuration example of the control unit 220 in the present embodiment.

As shown in FIG. 16, the control unit 200 includes a color information acquisition unit 1601, a concavity / convexity information acquisition unit 1602, a gloss information acquisition unit 1603, a concavity / convexity information separation unit 1604, a table holding unit 1605, and a data generation unit 1606. The data generation unit 1606 includes a first concavity / convexity data generation unit 1607, a color material data generation unit 1608, a second concavity / convexity data generation unit 1609, and a gloss data generation unit 1610.

The color information acquisition unit 1601 and the concavity / convexity information acquisition unit 1602 are the same as the color information acquisition unit 601 and the concavity / convexity information acquisition unit 602 of the first embodiment, and therefore, explanation thereof is omitted. The gloss information acquisition unit 1603 acquires gloss information representing a distribution of gloss of a three-dimensional image desired to be output and sends the acquired gloss information to the gloss data generation unit 1610. The gloss information is assumed to be a gray scale image in which the specular glossiness obtained by PM1-M is represented by an 8-bit pixel value. The concavity / convexity information separation unit 1604 receives concavity / convexity information from the concavity / convexity information acquisition unit and separates the received concavity / convexity information into first concavo-convex layer information and second concavo-convex layer information. Then, the concavity / convexity information separation unit 1604 sends the first concavo-convex layer information to,the first concavity / convexity data generation unit 1607 and the second concavo-convex layer information to the second concavity / convexity data generation unit 1609 and to the gloss data generation unit 1610. The table holding unit 1605 holds an LUT for converting gloss information into gloss data. Details of the table held by the table holding unit 1605 will be described later. The first concavity / convexity data generation unit, the color material data generation unit, and the second concavity / convexity data generation unit are the same as those of the first and second embodiments. The gloss data generation unit 1610 receives the second concavo-convex layer information from the concavity / convexity information separation unit 1604 as well as receiving the gloss information from the gloss information acquisition unit 1603. Then, the gloss data generation unit 1610 generates the gloss data for forming a glossy layer on a printing medium based on the received gloss information and second concavo-convex layer information by using the LUT held by the table holding unit 1605.

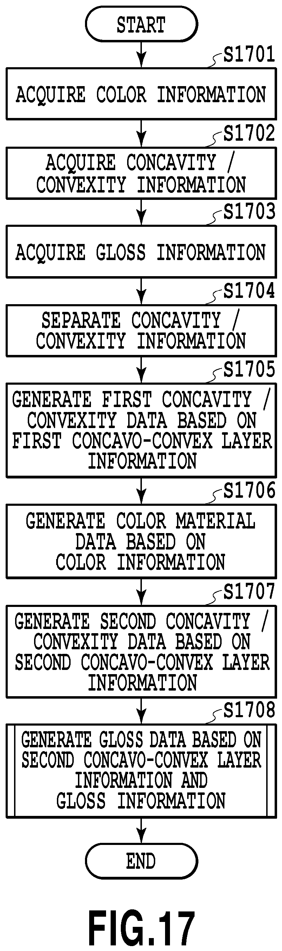

Hereinafter, processing that is performed by the image processing apparatus in the present embodiment is explained using FIG. 17. Step S1701 and step S1702 are the same as step S801 and step S802 in the first embodiment, and therefore, explanation thereof is omitted. At step S1703, the gloss information acquisition unit 1603 acquires the gloss information representing the distribution of gloss of the reproduction-target three-dimensional image. Step S1704 to step S1707 are the same as step S803 to step S806 in the first embodiment, and therefore, explanation thereof is omitted. At step S1708, the gloss data generation unit 1610 generates the gloss data from the gloss information by using the second concavo-convex layer information and the LUT held by the table holding unit 1605. Specifically, the gloss data generation unit 1610 generates the gloss data for forming a glossy layer on the second concavo-convex layer by converting the glossiness into a clear ink amount. Details of step S1708 will be described later.

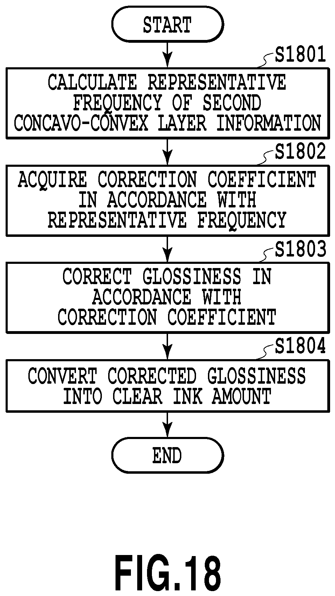

Hereinafter, details of gloss data generation processing (step S1708 in FIG. 17) are explained using FIG. 18. At step S1801, the gloss data generation unit 1610 calculates a representative frequency that characterizes the second concavo-convex layer information (indicated by h2). In order to calculate the representative frequency, first, the second concavo-convex layer information h2 is resolved into frequency components by using the publicly known Fourier transformation as shown in expression (14). However, the method that is used to resolve into frequency components is not limited to the Fourier transformation. For example, it may also be possible to use the wavelet conversion. $A \left(u, v\right) = FFT \left(H\left(x, y\right)\right)$

Next, the representative frequency (indicated by fₘₐₓ) that characterizes the second concavo-convex layer information is calculated by expression (15) by using a frequency-resolved image A (u, v). In expression (15), arg*ₓ*max (*g* (x)) is a function to find a variable x that maximizes a function g (x). In the present embodiment, as shown in expression (15), the maximum amplitude value in the frequency space is taken to be the representative frequency that characterizes the second concavo-convex layer information, but the frequency that characterizes the concavity / convexity information is not limited to this. For example, the representative frequency may be a statistical value, such as the average frequency and the median of the frequency. ${f}_{max} = {arg}_{f} gmax \left(A\left(f\right)\right) , here f = √ {u}^{2} + {v}^{2}$

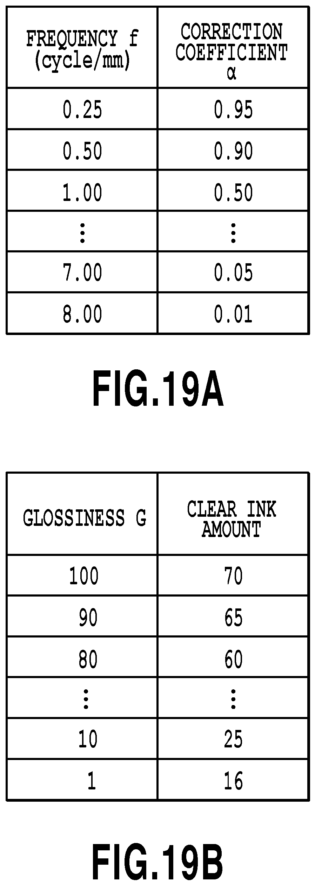

At step S1802, the gloss data generation unit 1610 acquires a correction coefficient of the gloss corresponding to the representative frequency of the second concavo-convex layer information calculated at step S1801 from the correction table held by the table holding unit 1605. Here, an example of the correction table held by the table holding unit 1605 is shown in FIG. 19A. As shown in FIG. 19A, in the correction table, a frequency f of concavities / convexities and a correction coefficient α for correcting gloss are associated with each other. In general, as the frequency of concavities / convexities increases, the specular glossiness decreases. Consequently, the correction coefficient becomes smaller as the frequency of concavities / convexities increases as shown in FIG. 19A. In the case where a value corresponding to the frequency fₘₐₓ does not exist in the table, the correction coefficient is calculated by the publicly known linear interpolation.

At step S1803, the gloss data generation unit 1610 corrects the glossiness by expression (16) by using the correction coefficient acquired at step S1802 and calculates corrected glossiness (indicated by Gout). In expression (16), Gin is the glossiness acquired at step S1703 and α is the correction coefficient acquired at step S1802. $Gout = Gin \times α$

At step S1804, the gloss data generation unit 1610 converts the glossiness Gout acquired at step S1803 into the amount of ink (clear ink) for gloss control by using the table held by the table holding unit 1605 and terminates the processing. In the present embodiment, the specular glossiness is controlled by applying a clear ink amount to the uppermost surface of the image under predetermined conditions, such as the dot pattern and the number of paths based on the ink amount and by changing the surface roughness. In FIG. 19B, an example of the conversion table for converting the glossiness into the clear ink amount is shown. As shown in FIG. 19B, the glossiness and the clear ink amount (%) are associated with each other. In the case where a value corresponding to the glossiness Gout does not exist in the table, the clear ink amount is acquired by the publicly known linear interpolation.

By the present embodiment, it is made possible to control gloss by providing a glossy layer on the second concavo-convex layer. At this time, the glossiness is converted into the amount of ink for gloss control in view of the gloss that changes depending on the shape of the second concavo-convex layer, and therefore, it is possible to control gloss more appropriately.

### [Other Embodiments]

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment (s) and/or that includes one or more circuits (e.g., application specific integrated circuit (ASIC)) for performing the functions of one or more of the above-described embodiment (s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

By the present invention, it is possible to improve color reproduction accuracy at the time of printing a three-dimensional image. Further, in the previously described embodiments, the example is described in which the control unit 220 is implemented by software processing, but it is also possible to implement each unit of the control unit 220 by a dedicated image processing circuit or the like. Further, the case is explained where the image processing apparatus 24 is the external apparatus of the image forming apparatus 25, but an aspect may be accepted in which the image processing apparatus 24 is incorporated in the image forming apparatus 25. For example, it is also possible to implement each unit shown in FIG. 6 by a circuit and to implement the image processing apparatus 24 as the image processing circuit incorporated in the image forming apparatus 25.

While the present invention has been described with reference to exemplary embodiments, it is to be understood that the invention is not limited to the disclosed exemplary embodiments. The scope of the following claims is to be accorded the broadest interpretation.

## Claims

1. An image processing apparatus that generates information for forming a color material layer and a concavo-convex layer on the surface of a printing medium to reproduce a surface of a three-dimensional object, the apparatus comprising:
a shape information acquisition means (602) configured to acquire shape information representing concavities / convexities of the surface of the three-dimensional object, wherein the shape information is data describing a two-dimensional distribution of heights of said concavities / convexities with respect to a reference surface, wherein each height (h) of the data is held by a pixel of said data as a pixel value thereof; and
a first generation means (603) configured to generate first concavo-convex layer information comprising pixels the values of which indicate heights of concavities / convexities of a first concavo-convex layer to be formed beneath the color material layer based on the shape information, and second concavo-convex layer information comprising pixels the values of which indicate heights of concavities / convexities of a second concavo-convex layer to be formed on the color material layer;
**characterized in that**
the first generation means generates the second concavo-convex layer information by calculating, for each pixel in the shape information, a difference (h₂) between the pixel value (h) of the each pixel in the shape information and the pixel value (h₁) of a pixel in the first concavo-convex layer information at a pixel coordinate corresponding to a pixel coordinate (x, y) of the each pixel in the shape information, and by setting the pixel value of a pixel in the second concavo-convex layer information at a pixel coordinate corresponding to a pixel coordinate (x, y) of the each pixel in the shape information to the calculated difference; and
wherein the concavo-convex shape that is to be reproduced by the first concavo-convex layer information is a shape onto which ink can settle.

2. The image processing apparatus according to claim 1, further comprising:
a color information acquisition means configured to acquire color information of the object; and
a second generation means configured to generate color material data for forming the color material layer based on the color information.

3. The image processing apparatus according to claim 1 or 2, wherein
the first generation means generates the first concavo-convex layer information and the second concavo-convex layer information by finding an inclination angle for each pixel in the shape information and by determining whether or not the inclination angle that is found is less than or equal to a predefined threshold angle.

4. The image processing apparatus according to claim 1 or 2, wherein
the first generation means generates the first concavo-convex layer information by performing filter processing using a low-pass filter on the shape information.

5. The image processing apparatus according to claim 1, further comprising a conversion means configured to convert the first concavo-convex layer information and the second concavo-convex layer information into first concavity / convexity data and second concavity / convexity data, respectively, which can be output by an image forming apparatus that forms the concavo-convex layer by using ink.

6. The image processing apparatus according to claim 1, further comprising:
an image forming means arranged to form the color material layer and the concavo-convex layer; and
a color information acquisition means configured to acquire color information including pixel values indicating a color, wherein
the image forming means forms the first concavo-convex layer based on the first concavo-convex layer information, the color material layer based on the color information, and the second concavo-convex layer based on the second concavo-convex layer information in this stacking order on the printing medium.

7. An image processing method of generating information for forming a color material layer and a concavo-convex layer on the surface of a printing medium to reproduce a surface of a three-dimensional object, the method comprising:
a step (S802) of acquiring shape information representing concavities / convexities of the surface of the three-dimensional object, wherein the shape information is data describing a two-dimensional distribution of heights of said concavities / convexities with respect to a reference surface, wherein each height (h) of the data is held by a pixel of said data as a pixel value thereof; and
a step (S804, S806) of generating first concavo-convex layer information comprising pixels the values of which indicate heights of concavities / convexities of a first concavo-convex layer to be formed beneath the color material layer based on the shape information, and second concavo-convex layer information comprising pixels the values of which indicate heights of concavities / convexities of a second concavo-convex layer to be formed on the color material layer;
**characterized in that**
the generating step generates the second concavo-convex layer information by calculating (S908), for each pixel in the shape information, a difference (h₂) between the pixel value (h) of the each pixel in the shape information and the pixel value (h₁) of a pixel in the first concavo-convex layer information at a pixel coordinate corresponding to the pixel coordinate (x, y) of the each pixel in the shape information, and by setting the pixel value of a pixel in the second concavo-convex layer information at a pixel coordinate corresponding to the pixel coordinate (x, y) of the each pixel in the shape information to the calculated difference;
wherein the concavo-convex shape that is to be reproduced by the first concavo-convex layer information is a shape onto which ink can settle.

8. A program for causing a computer to perform the image processing method according to claim 7 on an image processing apparatus according to claim 1.

## Patentansprüche

1. Bildverarbeitungsvorrichtung, die Information zum Bilden einer Farbmaterialschicht und einer Konkavkonvexschicht auf der Oberfläche eines Druckmediums erzeugt, um eine Oberfläche eines dreidimensionalen Objekts wiederzugeben, wobei die Vorrichtung umfasst:
eine Forminformationserfassungseinrichtung (602), die konfiguriert ist, Forminformation zu erfassen, die Dellen / Ausbuchtungen der Oberfläche des dreidimensionalen Objekts darstellt, wobei die Forminformation Daten sind, die eine zweidimensionale Verteilung von Höhen der Dellen / Ausbuchtungen bezüglich einer Referenzoberfläche beschreiben, wobei eine jeweilige Höhe (h) der Daten durch einen Pixel der Daten als ein Pixelwert desselben gespeichert ist; und
eine erste Erzeugungseinrichtung (603), die konfiguriert ist zum Erzeugen erster Konkavkonvexschichtinformation, die Pixel umfasst, deren Werte Höhen von Dellen / Ausbuchtungen einer ersten Konkavkonvexschicht angeben, die basierend auf der Forminformation unter der Farbmaterialschicht gebildet werden soll, und zweiter Konkavkonvexschichtinformation, die Pixel umfasst, deren Werte Höhen von Dellen / Ausbuchtungen einer zweiten Konkavkonvexschicht angeben, die auf der Farbmaterialschicht gebildet werden soll;
**dadurch gekennzeichnet, dass**
die erste Erzeugungseinrichtung die zweite Konkavkonvexschichtinformation erzeugt, indem sie für einen jeweiligen Pixel in der Forminformation eine Differenz (h₂) zwischen dem Pixelwert (h) des jeweiligen Pixels in der Forminformation und dem Pixelwert (h₁) eines Pixels in der ersten Konkavkonvexschichtinformation an einer Pixelkoordinate berechnet, die einer Pixelkoordinate (x, y) des jeweiligen Pixels in der Forminformation entspricht, und indem sie den Pixelwert eines Pixels in der zweiten Konkavkonvexschichtinformation an einer Pixelkoordinate, die einer Pixelkoordinate (x, y) des jeweiligen Pixels in der Forminformation entspricht, auf die berechnete Differenz festlegt; und
wobei die durch die erste Konkavkonvexschichtinformation wiederzugebende Konkavkonvexform eine Form ist, auf der sich Tinte absetzen kann.

2. Bildverarbeitungsvorrichtung nach Anspruch 1, weiterhin umfassend:
eine Farbinformationserfassungseinrichtung, die konfiguriert ist, Farbinformation des Objekts zu erfassen; und
eine zweite Erzeugungseinrichtung, die konfiguriert ist, Farbmaterialdaten zum Bilden der Farbmaterialschicht basierend auf der Farbinformation zu erzeugen.

3. Bildverarbeitungsvorrichtung nach Anspruch 1 oder 2, wobei
die erste Erzeugungseinrichtung die erste Konkavkonvexschichtinformation und die zweite Konkavkonvexschichtinformation erzeugt, indem sie einen Neigungswinkel für einen jeweiligen Pixel in der Forminformation findet und bestimmt, ob der gefundene Neigungswinkel kleiner als oder gleich groß wie ein vordefinierter Schwellenwinkel ist.

4. Bildverarbeitungsvorrichtung nach Anspruch 1 oder 2, wobei
die erste Erzeugungseinrichtung die erste Konkavkonvexschichtinformation erzeugt, indem sie an der Forminformation Filterverarbeitung unter Verwendung eines Tiefpassfilters durchführt.

5. Bildverarbeitungsvorrichtung nach Anspruch 1, die weiterhin eine Umwandlungseinrichtung umfasst, welche konfiguriert ist, die erste Konkavkonvexschichtinformation und die zweite Konkavkonvexschichtinformation jeweils in erste Daten über Dellen und Ausbuchtungen und zweite Daten über Dellen und Ausbuchtungen umzuwandeln, welche durch eine Bilderzeugungsvorrichtung ausgegeben werden können, die die Konkavkonvexschicht unter Verwendung von Tinte bildet.

6. Bildverarbeitungsvorrichtung nach Anspruch 1, weiterhin umfassend:
eine Bilderzeugungseinrichtung, die ausgelegt ist, die Farbmaterialschicht und die Konkavkonvexschicht zu bilden; und
eine Farbinformationserfassungseinrichtung, die konfiguriert ist, Farbinformation zu erfassen, die Pixelwerte enthält, welche eine Farbe angeben, wobei
die Bilderzeugungseinrichtung die erste Konkavkonvexschicht basierend auf der ersten Konkavkonvexschichtinformation, die Farbmaterialschicht basierend auf der Farbinformation, und die zweite Konkavkonvexschicht basierend auf der zweiten Konkavkonvexschichtinformation in dieser Schichtungsreihenfolge auf dem Druckmedium bildet.

7. Bildverarbeitungsverfahren zum Erzeugen von Information zum Bilden einer Farbmaterialschicht und einer Konkavkonvexschicht auf der Oberfläche eines Druckmediums, um eine Oberfläche eines dreidimensionalen Objekts wiederzugeben, wobei das Verfahren umfasst:
einen Schritt (S802) des Erfassens von Forminformation, die Dellen / Ausbuchtungen der Oberfläche des dreidimensionalen Objekts darstellt, wobei die Forminformation Daten sind, die eine zweidimensionale Verteilung von Höhen der Dellen / Ausbuchtungen bezüglich einer Referenzoberfläche beschreiben, wobei eine jeweilige Höhe (h) der Daten durch einen Pixel der Daten als ein Pixelwert desselben gespeichert ist; und
einen Schritt (S804, S806) des Erzeugens erster Konkavkonvexschichtinformation, die Pixel umfasst, deren Werte Höhen von Dellen / Ausbuchtungen einer ersten Konkavkonvexschicht angeben, die basierend auf der Forminformation unter der Farbmaterialschicht gebildet werden soll, und zweiter Konkavkonvexschichtinformation, die Pixel umfasst, deren Werte Höhen von Dellen / Ausbuchtungen einer zweiten Konkavkonvexschicht angeben, die auf der Farbmaterialschicht gebildet werden soll;
**dadurch gekennzeichnet, dass**
der Erzeugungsschritt die zweite Konkavkonvexschichtinformation erzeugt mittels Berechnen (S908), für einen jeweiligen Pixel in der Forminformation, einer Differenz (h₂) zwischen dem Pixelwert (h) des jeweiligen Pixels in der Forminformation und dem Pixelwert (h₁) eines Pixels in der ersten Konkavkonvexschichtinformation an einer Pixelkoordinate, die einer Pixelkoordinate (x, y) des jeweiligen Pixels in der Forminformation entspricht, und mittels Festlegen des Pixelwerts eines Pixels in der zweiten Konkavkonvexschichtinformation an einer Pixelkoordinate, die einer Pixelkoordinate (x, y) des jeweiligen Pixels in der Forminformation entspricht, auf die berechnete Differenz;
wobei die durch die erste Konkavkonvexschichtinformation wiederzugebende Konkavkonvexform eine Form ist, auf der sich Tinte absetzen kann.

8. Programm zum Veranlassen eines Computers, das Bildverarbeitungsverfahren nach Anspruch 7 auf einer Bildverarbeitungsvorrichtung nach Anspruch 1 durchzuführen.

## Revendications

1. Appareil de traitement d'image qui génère des informations pour former une couche de matériau coloré et une couche concavo-convexe sur la surface d'un support d'impression afin de reproduire une surface d'un objet tridimensionnel, l'appareil comprenant :
un moyen d'acquisition d'informations de forme (602) configuré pour acquérir des informations de forme représentant des concavités/convexités de la surface de l'objet tridimensionnel, où les informations de forme sont des données décrivant une distribution bidimensionnelle des hauteurs desdites concavités/convexités par rapport à une surface de référence, où chaque hauteur (h) des données est contenue dans un pixel desdites données en tant que valeur de pixel de celles-ci ; et
un premier moyen de génération (603) configuré pour générer des premières informations de couche concavo-convexe comprenant des pixels dont les valeurs indiquent des hauteurs de concavités/convexités d'une première couche concavo-convexe devant être formée sous la couche de matériau coloré sur la base des informations de forme, et des secondes informations de couche concavo-convexe comprenant des pixels dont les valeurs indiquent des hauteurs de concavités/convexités d'une seconde couche concavo-convexe devant être formée sur la couche de matériau coloré ;
**caractérisé en ce que**
le premier moyen de génération génère les secondes informations de couche concavo-convexe en calculant, pour chaque pixel contenu dans les informations de forme, une différence (h₂) entre la valeur de pixel (h) de chaque pixel contenu dans les informations de forme et la valeur de pixel (h₁) d'un pixel contenu dans les premières informations de couche concavo-convexe à l'emplacement d'une coordonnée de pixel correspondant à une coordonnée de pixel (x, y) de chaque pixel contenu dans les informations de forme, et en réglant la valeur de pixel d'un pixel contenu dans les secondes informations de couche concavo-convexe à l'emplacement d'une coordonnée de pixel correspondant à une coordonnée de pixel (x, y) de chaque pixel contenu dans les informations de forme à la différence calculée ; et
dans lequel la forme concavo-convexe qui doit être reproduite par les premières informations de couche concavo-convexe, est une forme sur laquelle de l'encre peut se déposer.

2. Appareil de traitement d'image selon la revendication 1, comprenant en outre :
un moyen d'acquisition d'informations de couleur configuré pour acquérir des informations de couleur de l'objet ; et
un second moyen de génération configuré pour générer des données de matériau coloré pour former la couche de matériau coloré sur la base des informations de couleur.

3. Appareil de traitement d'image selon la revendication 1 ou 2, dans lequel
le premier moyen de génération génère les premières informations de couche concavo-convexe et les secondes informations de couche concavo-convexe en trouvant un angle d'inclinaison pour chaque pixel contenu dans les informations de forme et en déterminant si oui ou non l'angle d'inclinaison trouvé est inférieur ou égal à un angle seuil prédéfini.

4. Appareil de traitement d'image selon la revendication 1 ou 2, dans lequel
le premier moyen de génération génère les premières informations de couche concavo-convexe en effectuant un traitement de filtrage à l'aide d'un filtre passe-bas sur les informations de forme.

5. Appareil de traitement d'image selon la revendication 1, comprenant en outre un moyen de conversion configuré pour convertir respectivement les premières informations de couche concavo-convexe et les secondes informations de couche concavo-convexe en premières données de concavité/convexité et en deuxièmes données de concavité/convexité, qui peuvent être fournies en sortie par un appareil de formation d'image qui forme la couche concavo-convexe en utilisant de l'encre.

6. Appareil de traitement d'image selon la revendication 1, comprenant en outre :
un moyen de formation d'image conçu pour former la couche de matériau coloré et la couche concavo-convexe ; et
un moyen d'acquisition d'informations de couleur configuré pour acquérir des informations de couleur contenant des valeurs de pixels indiquant une couleur, où
le moyen de formation d'image forme la première couche concavo-convexe sur la base des premières informations de couche concavo-convexe, la couche de matériau coloré sur la base des informations de couleur, et la seconde couche concavo-convexe sur la base des secondes informations de couche concavo-convexe, dans cet ordre d'empilement sur le support d'impression.

7. Procédé de traitement d'image consistant à générer des informations pour former une couche de matériau coloré et une couche concavo-convexe sur un support d'impression afin de reproduire une surface d'un objet tridimensionnel, le procédé comprenant :
une étape (S802) d'acquisition d'informations de forme représentant des concavités/convexités de la surface de l'objet tridimensionnel, où les informations de forme sont des données décrivant une distribution bidimensionnelle de hauteurs desdites concavités/convexités par rapport à une surface de référence, où chaque hauteur (h) des données est contenue dans un pixel desdites données en tant que valeur de pixel de celles-ci ; et
une étape (S804, S806) de génération de premières informations de couche concavo-convexe comprenant des pixels dont les valeurs indiquent des hauteurs de concavités/convexités d'une première couche concavo-convexe devant être formée sous la couche de matériau coloré sur la base des informations de forme, et des secondes informations de couche concavo-convexe comprenant des pixels dont les valeurs indiquent des hauteurs de concavités/convexités d'une seconde couche concavo-convexe devant être formée sur la couche de matériau coloré ;
**caractérisé en ce que**
l'étape de génération génère les secondes informations de couche concavo-convexe en calculant (S908), pour chaque pixel contenu dans les informations de forme, une différence (h₂) entre la valeur de pixel (h) de chaque pixel contenu dans les informations de forme et la valeur de pixel (h₁) d'un pixel contenu dans les premières informations de couche concavo-convexe à l'emplacement d'une coordonnée de pixel correspondant à la coordonnée de pixel (x, y) de chaque pixel contenu dans les informations de forme, et en réglant la valeur de pixel d'un pixel contenu dans les secondes informations de couche concavo-convexe à l'emplacement d'une coordonnée de pixel correspondant à la coordonnée de pixel (x, y) de chaque pixel contenu dans les informations de forme à la différence calculée ;
dans lequel la forme concavo-convexe qui doit être reproduite par les premières informations de couche concavo-convexe, est une forme sur laquelle de l'encre peut se déposer.

8. Programme pour amener un ordinateur à mettre en œuvre le procédé de traitement d'image selon la revendication 7 sur un appareil de traitement d'image selon la revendication 1.
